(19) Europäisches Patentamt
European Patent Office
Office européen des brevets

(11) Veröffentlichungsnummer: **0 688 804 A2**

(12) **EUROPÄISCHE PATENTANMELDUNG**

(21) Anmeldenummer: **95105235.6**

(22) Anmeldetag: **07.04.95**

(51) Int. Cl.[6]: **C08G 59/68**, C08L 63/00, C08G 65/10

(30) Priorität: **21.06.94 DE 4421623**

(43) Veröffentlichungstag der Anmeldung: **27.12.95 Patentblatt 95/52**

(84) Benannte Vertragsstaaten: **AT CH DE FR GB IT LI**

(71) Anmelder: **THERA Patent GmbH & Co. KG**
**Gesellschaft für industrielle Schutzrechte**
**Am Griesberg 2**
**D-82229 Seefeld (DE)**

(72) Erfinder: **Eckhardt, Gunther, Dr.**
**Delo Industrieklebst. GmbH & Co. KG,**
**Ohmstrasse 3**
**D-86899 Landsberg (DE)**
Erfinder: **Uhl, Gerald**
**Delo Industrieklebst. GmbH & Co. KG,**
**Ohmstrasse 3**
**D-86899 Landsberg (DE)**

(74) Vertreter: **Bunke, Holger, Dr.rer.nat.**
**Dipl.-Chem.**
**Prinz & Partner**
**Manzingerweg 7**
**D-81241 München (DE)**

# (54) Mehrkomponentige, kationisch härtende Epoxidmassen sowie Verfahren zu ihrer Härtung

(57) Es werden kationisch härtende Epoxidmassen vorgeschlagen, die als zwingende Bestandteile Lewis- und/oder Brönsted-Säuren sowie kationisch polymerisierbare Monomere und als fakultative Bestandteile mindestens einen aus der Gruppe Flexibilisierungsmittel, Verzögerer, radikalisch polymerisierbare Monomere, Beschleuniger und Modifikatoren aufweisen, wobei die Bestandteile auf mindestens zwei Komponenten derart aufgeteilt sind, daß die Komponenten getrennt voneinander über einen Zeitraum von mindestens 90 Tagen bei Raumtemperatur reaktionsfähig bleiben und einer Härtungsreaktion unterliegen, wenn sie miteinander in Kontakt gebracht werden. Die Lewis- und/oder Brönsted-Säuren können auch in Form von Photoinitiatoren, die erst unter Lichteinwirkung die entsprechenden Säuren erzeugen, oder aber in Form von Gemischen aus freien Säuren und Photoinitiatoren eingesetzt werden.

Die Erfindung betrifft ferner Verfahren zur Herstellung von kationisch gehärteten Massen, wobei die mindestens zweikomponentigen kationisch härtenden Epoxidmassen eingesetzt werden. Die Aushärtung erfolgt innerhalb von 1 bis 1000 Sekunden.

Die kationisch härtenden Epoxidmassen werden zum Verkleben, Vergießen, Abdichten und Beschichten von Substraten verwendet.

EP 0 688 804 A2

Die Erfindung betrifft kationisch härtende Epoxidmassen und deren Verwendung. Weiterhin bezieht sich die Erfindung auf Verfahren zur Herstellung gehärteter Polyethermassen aus diesen Epoxidmassen.

Die Anwendung von Epoxidmassen für das Verkleben, Vergießen, Abdichten und Beschichten ist seit langem bekannt. Es ist ebenfalls bekannt, durch lichtinitiierte kationische Polymerisation von Epoxidmassen, die cycloaliphatische, aromatische oder aliphatische Epoxidharze enthalten, Polyethermassen zu erzeugen, die sich durch eine hohe Kohäsion und ein sehr gutes Adhäsionsvermögen auf einer Vielzahl von Substraten auszeichnen.

Seit langem bekannt ist auch die Tatsache, daß die Reaktivität von lichtinduziert kationischen Massen über einen längeren Zeitraum erhalten bleibt. Diese Eigenschaft kationisch härtender Massen, voraktivierbar zu sein, hat zu einer Reihe von Vorschlägen geführt, bei denen die Fähigkeit von photoinitiatorhaltigen, vorwiegend cycloaliphatischen Epoxidmassen genutzt wird, nach kurzzeitiger Bestrahlung mit Licht einer Wellenlänge von 200 bis 600 nm innerhalb eines Längeren Zeitraums nach der Belichtung auch in Schattenbereichen auszuhärten.

So beschreibt die US-A-5 154 791 ein Verfahren zum Verbinden oder Vergießen von Substraten durch kationisch polymerisierbare Massen, die vor dem Verbinden oder Vergießen aktiviert werden. Nachteilig bei diesem Verfahren ist allerdings die begrenzte Verwendbarkeit der aktivierten Masse.

Außerdem ist seit langem bekannt, chemisch aushärtende Massen zu formulieren, bei denen die wesentlichen Verbindungen des Reaktivsystems so auf zwei Komponenten der Zubereitung verteilt werden, daß eine hohe Lagerstabilität der einzeln gelagerten Komponenten erreicht wird und ein durch Vermischen der Komponenten erzeugtes Gemisch in einem meist vorbestimmbaren Zeitraum aushärtet.

Bei den durch Polyadditionsreaktionen aushärtenden zweikomponentigen Epoxidharzmassen enthalten die beiden Komponenten unterschiedliche Verbindungen, die so funktionalisiert sind, daß sie nach Mischung innerhalb eines vorgegebenen Zeitraumes zu einem festen Polymeren-Netzwerk aushärten.

So enthält beispielsweise die erste Komponente ein Gemisch verschiedener vorwiegend aromatischer Glycidyl-Verbindungen und die zweite Komponente ein Gemisch von aliphatischen Polyaminen, die ggf. durch Addition geeigneter Epoxid-Verbindungen auf einen bestimmten Gehalt an reaktiven Gruppen eingestellt werden. Nachteilig bei diesen durch Polyaddition aushärtenden zweikomponentigen Epoxidmassen ist der Umstand, daß zur Erreichung eines möglichst optimalen Eigenschaftsbildes ein exakt vorgegebenes Verhältnis der reaktiven Verbindungen beider Komponenten eingehalten werden muß und außerdem eine sehr hohe Mischgüte der Masse nach dem Vereinigen erforderlich ist.

Es ist weiterhin bekannt, durch Vermischen von Epoxidharzen mit Lewis-Säuren und/oder Brönsted-Säuren eine kationische Polymerisation zu bewirken. Dabei kann jedoch die Reaktion mit einer so hohen Geschwindigkeit ablaufen, daß sie technisch nicht mehr beherrschbar ist und zu nicht homogenen Polymerisaten führt.

Der Erfindung liegt deshalb die Aufgabe zugrunde, mehrkomponentige kationisch härtende Epoxidmassen zu entwickeln, die eine möglichst hohe Aushärtungsgeschwindigkeit besitzen, deren Aushärtung sich aber dennoch auf einfache und zugleich exakt reproduzierbare Weise technisch beherrschen läßt und die zu homogenen Polymerisaten mit wertvollen Eigenschaftskombinationen führen.

Diese Aufgabe wird erfindungsgemäß gelöst durch kationisch härtende Epoxidmassen, deren Bestandteile auf mindestens zwei Komponenten derart aufgeteilt sind, daß die Komponenten über einen Zeitraum von mindestens 90 Tagen bei Raumtemperatur reaktionsfähig bleiben und - teils mit, teils ohne vorherige Aktivierung, teils unabhängig davon, ob eine vorherige Aktivierung stattgefunden hat oder nicht - einer Härtungsreaktion unterliegen, wenn sie miteinander in Kontakt gebracht werden, sei es dadurch, daß sie miteinander vermischt werden, oder sei es im "no-mix"-Verfahren.

Gemäß einer ersten Ausführungsform der Erfindung bestehen die kationisch härtenden Epoxidmassen aus

(A) Lewis-Säuren und/oder Brönsted-Säuren

(B) Kationisch polymerisierbaren epoxidgruppenhaltigen Monomeren

sowie mindestens einem der weiteren Bestandteile

(C) Flexibilisierungsmittel

(D) Verzögerer

(E) Radikalisch polymerisierbare Monomere

(F) Beschleuniger

(G) Modifikatoren, ausgewählt aus der aus Farbstoffen, Pigmenten, Füllstoffen, Verstärkungsmitteln, Thixotropiermitteln, Initiatoren, Stabilisatoren, Inhibitoren und Haftvermittlern bestehenden Gruppe,

wobei die Bestandteile (A), (B) und die aus der Gruppe (C) bis (G) ausgewählten Bestandteile auf mindestens zwei Komponenten derart aufgeteilt sind, daß die mindestens eine Komponente, die den Bestandteil (A) enthält, höchstens 20 % Bestandteil (B), bezogen auf die Gesamtmasse der jeweiligen, den

Bestandteil (A) enthaltenden Komponente, enthält und daß die Komponenten getrennt voneinander über einen Zeitraum von mindestens 90 Tagen bei Raumtemperatur reaktionsfähig bleiben und ohne Aktivierung einer Härtungsreaktion unterliegen, wenn sie miteinander in Kontakt gebracht werden.

Bei dieser ersten Ausführungsform der Erfindung, bei der die als Polymerisationsinitiatoren wirkenden Lewis-Säuren und/oder Brönsted-Säuren in freier Form vorliegen, kommt die kationische Polymerisation in Gang, wenn die Bestandteile (A) und (B) zusammenkommen. Da die Polymerisationsreaktion mit sehr hoher Geschwindigkeit abläuft, werden die fakultativen Bestandteile so ausgewählt, daß eine zwar rasche, aber doch sicher beherrschbare Härtung erfolgt. In aller Regel werden bei dieser Ausführungsform der Erfindung neben radikalisch polymerisierbaren Monomeren (E) und Modifikatioren (G) nur Flexibilisierungsmittel (C), jedoch keine Beschleuniger (F) und Verzögerer (D) zugesetzt.

Gemäß einer zweiten Ausführungsform der Erfindung bestehen die kationisch härtenden Epoxidmassen aus

(A) Verbindungen, die unter der Einwirkung von Licht mit einer Wellenlänge zwischen 280 bis 650 nm Lewis-Säuren und/oder Brönsted-Säuren erzeugen,
(B) Kationisch polymerisierbaren epoxidgruppenhaltigen Monomeren

sowie mindestens einem der weiteren Bestandteile

(C) Flexibilisierungsmittel
(D) Verzögerer
(E) Radikalisch polymerisierbare Monomere
(F) Beschleuniger
(G) Modifikatoren, ausgewählt aus der aus Farbstoffen, Pigmenten, Füllstoffen, Verstärkungsmitteln, Thixotropiermitteln, Initiatoren, Stabilisatoren, Inhibitoren und Haftvermittlern bestehenden Gruppe,

wobei die Bestandteile (A), (B) und die aus der Gruppe (C) bis (G) ausgewählten Bestandteile auf mindestens zwei Komponenten derart aufgeteilt sind, daß die mindestens eine Komponente, die den Bestandteil (A) enthält, höchstens 20 % Bestandteil (B), bezogen auf die Gesamtmasse der jeweiligen, den Bestandteil (A) enthaltenden Komponente, enthält und daß die Komponenten getrennt voneinander sowohl vor als auch nach einer aktivierenden Belichtung der den Bestandteil (A) enthaltenden Komponente(n) über einen Zeitraum von mindestens 90 Tagen bei Raumtemperatur reaktionsfähig bleiben und nach einer aktivierenden Belichtung der den Bestandteil (A) enthaltenden Komponente(n) einer Härtungsreaktion unterliegen, wenn sie miteinander in Kontakt gebracht werden.

Bei dieser zweiten Ausführungsform der Erfindung müssen die in maskierter Form vorliegenden Polymerisationsinitiatoren der Komponente (A) erst durch Bestrahlung mit Licht einer Wellenlänge zwischen 280 und 650 nm, in aktive Spezies übergeführt werden, die in der Lage sind, eine kationische Polymerisation einzuleiten. Als Verbindungen, die unter Lichteinwirkung solche aktiven Spezies wie Lewis-Säuren und/oder Brönsted-Säuren erzeugen, werden vorzugsweise bestimmte Klassen von Photoinitiatoren verwendet, wie unten näher ausgeführt wird. Die Aktivierung der Initiatoren des Bestandteils (A) kann zwar unmittelbar vor dem Inkontaktbringen der mehreren Komponenten der Masse erfolgen, von besonderem Vorteil ist jedoch bei dieser Ausführungsform der Erfindung die Tatsache, daß die Aktivierung bereits bei oder nach der Herstellung der den Bestandteil (A) enthaltenen Komponenten durchgeführt werden kann, wonach die Komponenten getrennt voneinander über einen Zeitraum von mindestens 90 Tagen bei Raumtemperatur reaktionsfähig bleiben. Wenn die Aktivierung erst unmittelbar vor der Verwendung der Massen durchgeführt wird, dann können die den Bestandteil (A) enthaltenden Komponenten den Bestandteil (B) in höheren Konzentrationen enthalten, ohne daß es zu einer vorzeitigen Polymerisation in störendem Ausmaß kommt.

Durch geeignete Auswahl der fakultativen Bestandteile Flexibilisierungsmittel (C), Verzögerer (D) und Beschleuniger (F) lassen sich für jeden speziellen Anwendungszweck ideale Eigenschaftskombinationen und nahezu jeder gewünschte Härtungsverlauf erzielen.

Gemäß einer dritten Ausführungsform der Erfindung bestehen die kationisch härtenden Epoxidmassen aus

(A) einem Gemisch aus Verbindungen, die unter der Einwirkung von Licht mit einer Wellenlänge zwischen 280 und 650 nm Lewis-Säuren und/oder Brönsted-Säuren erzeugen, und Lewis-Säuren und/oder Brönsted-Säuren
(B) Kationisch polymerisierbaren epoxidgruppenhaltigen Monomeren

sowie mindestens einem der weiteren Bestandteile

(C) Flexibilisierungsmittel
(D) Verzögerer
(E) Radikalisch polymerisierbare Monomere
(F) Beschleuniger

(G) Modifikatoren, ausgewählt aus der aus Farbstoffen, Pigmenten, Füllstoffen, Verstärkungsmitteln, Thixotropiermitteln, Initiatoren, Stabilisatoren, Inhibitoren und Haftvermittlern bestehenden Gruppe,

wobei die Bestandteile (A), (B) und die aus der Gruppe (C) bis (G) ausgewählten Bestandteile auf mindestens zwei Komponenten derart aufgeteilt sind, daß die mindestens eine Komponente, die den Bestandteil (A) enthält, höchstens 20 % Bestandteil (B), bezogen auf die Gesamtmasse der jeweiligen, den Bestandteil (A) enthaltenden Komponente, enthält und daß die Komponenten getrennt voneinander sowohl vor als auch nach einer aktivierenden Energiezufuhr über einen Zeitraum von mindestens 90 Tagen bei Raumtemperatur reaktionsfähig bleiben und nach einer aktivierenden Belichtung der den Bestandteil (A) enthaltenden Komponente(n) einer Härtungsreaktion unterliegen, wenn sie miteinander in Kontakt gebracht werden.

Bei dieser dritten Ausführungsform der Erfindung werden als Bestandteil (A) Gemische aus freien Lewis- und/oder Brönsted-Säuren und maskierten Lewis- und/oder Brönsted-Säuren wie z.B. Photoinitiatoren der unten näher beschriebenen Klassen, eingesetzt, wodurch sich die Variationsmöglichkeiten hinsichtlich der Beeinflussung des Härtungsverlaufes der Massen und des gewünschten Kompromisses zwischen hoher Polymerisationsgeschwindigkeit und langer Lagerstabilität noch weiter steigern lassen.

Auch bei einer weiteren, der vierten Ausführungsform der Erfindung werden als Bestandteil (A) Gemische aus freien Lewis- und/oder Brönsted-Säuren und maskierten Lewis- und/oder Brönsted-Säuren wie z.B. Photoinitiatoren der unten näher beschriebenen Klassen eingesetzt.

Bei dieser vierten Ausführungsform der Erfindung handelt es sich um kationisch härtende Epoxidmassen, bestehend aus

(A) einem Gemisch aus Verbindungen, die Lewis-Säuren und/oder Brönsted-Säuren erzeugen, und Lewis-Säuren und/oder Brönsted-Säuren

(B) Kationisch polymerisierbaren epoxidgruppenhaltigen Monomeren

sowie mindestens einem der weiteren Bestandteile

(C) Flexibilisierungsmittel

(D) Verzögerer

(E) Radikalisch polymerisierbare Monomere

(F) Beschleuniger

(G) Modifikatoren, ausgewählt aus der aus Farbstoffen, Pigmenten, Füllstoffen, Verstärkungsmitteln, Thixotropiermitteln, Initiatoren, Stabilisatoren, Inhibitoren und Haftvermittlern bestehenden Gruppe, wobei die Bestandteile (A), (B) und die aus der Gruppe (C) bis (G) ausgewählten Bestandteile auf mindestens zwei Komponenten derart aufgeteilt sind, daß die mindestens eine Komponente, die den Bestandteil (A) enthält, höchstens 20 % Bestandteil (B), bezogen auf die Gesamtmasse der jeweiligen, den Bestandteil (A) enthaltenden Komponente, enthält, und daß die Komponenten getrennt voneinander über einen Zeitraum von mindestens 90 Tagen bei Raumtemperatur reaktionsfähig bleiben und ohne eine aktivierende Belichtung der den Bestandteil (A) enthaltenden Komponente(n) einer Härtungsreaktion unterliegen, wenn sie miteinander in Kontakt gebracht werden.

Die Bestandteile (A) und (B) werden bei allen Ausführungsformen der Erfindung in der Regel auf verschiedene Komponenten aufgeteilt; gleichwohl kann die den Bestandteil (A) enthaltende Komponente einen geringen Anteil kationisch polymerisierbarer Monomere enthalten, nämlich höchstens 20 %, vorzugsweise höchstens 5 %, und besonders bevorzugt höchstens 2 %, bezogen auf die Gesamtmasse dieser Komponente, was dann zu Prepolymeren führt, die weiterpolymerisieren, wenn diese Komponente mit der mindestens einen weiteren Komponente in Kontakt gebracht wird, die die Hauptmenge an kationisch polymerisierbaren Monomeren enthält.

Mit allen Ausführungsformen der Erfindung werden die folgenden Vorteile erzielt: Die kationisch polymerisierenden Epoxidmassen härten innerhalb von maximal 1000 Sekunden, vorzugsweise innerhalb eines Zeitraums von zwischen 10 und 200 Sekunden, zu entsprechenden Polyethermassen, nachdem die Komponenten miteinander in Kontakt gebracht worden sind. Dabei muß die Durchmischung nicht perfekt sein, da es sich beim Härtungsmechanismus nicht um eine Polyaddition handelt. Die Epoxidmassen sind thiolfrei, sind also weder mit einer Geruchsbelästigung noch mit der Gefahr einer Metallsulfidbildung verbunden. Von besonderem Vorteil ist die geringe Exothermie der erfindungsgemäßen Massen, insbesondere dann, wenn mit hohem "Füllgrad" gearbeitet wird, was für wärmesensible Anwendungen, beispielsweise auf dem Gebiet der elektronischen Bauteile, von besonderer Bedeutung ist. Voneinander getrennt, lassen sich die Komponenten über einen vorteilhaft langen Zeitraum von mindestens 90 Tagen bei Raumtemperatur lagern, wobei sie höchstens einen sehr geringen Viskositätsanstieg erleiden, während ihre Reaktionsfähigkeit vollständig erhalten bleibt. Die Massen lassen sich außerdem bis zu einem sehr hohen Grade mit Modifikatoren, z.B. Farbstoffen, Pigmenten, Füllstoffen, Verstärkungsmitteln, Thixotropiermitteln, Initiatoren, Stabilisatoren, Inhibitoren und Haftvermittlern versehen, ohne wesentlich an Reaktivität einzubüßen. Mindestens eine der Komponenten kann mit lichtundurchlässigen Farbstoffen oder Pigmenten versetzt werden, ohne den vorzugsweise lichtinduziert ablaufenden Härtungsmechanismus zu stören oder gar zu verhindern.

Als Brönsted-Säuren werden erfindungsgemäß vorzugsweise solche Protonensäuren verwendet, deren Anion eine geringe Nukleophilie besitzt. Demgemäß werden Hexafluoroantimonsäure, Hexafluoroarsensäure, Hexafluorophosphorsäure und Tetrafluoroborsäure besonders bevorzugt. Diese Protonensäuren können auch in Form ihrer Hydrate oder in Form ihrer Anlagerungskomplexe mit anderen Verbindungen eingesetzt werden.

Als Lewis-Säuren kommen insbesondere Bortrifluorid, Bortribromid, Bortrithiocyanat, Zinntetrachlorid, Zinntetrabromid und Antimonpentachlorid in Betracht. Technisch einfacher ist die Verwendung von Additionsverbindungen von Lewis-Säuren und solchen Stoffen, die ein freies Elektronenpaar besitzen. Deshalb werden Borfluorid-Ether-Komplexe für den Einsatz in den erfindungsgemäßen Massen bevorzugt, wobei Komplexe aus Borfluorid und Tetrahydrofuran besonders bevorzugt sind.

Als Verbindungen, die unter Lichteinwirkung Lewis-Säuren und/oder Brönsted-Säuren erzeugen, werden erfindungsgemäß Photoinitiatoren für die kationische Polymerisation, nämlich komplexe Oniumverbindungen und Ferroceniumverbindungen verwendet. Typische Vertreter dieser Verbindungsklassen sind die handelsüblichen Verbindungen Trisarylsulfoniumhexafluoroantimonat (z.B. Cyracure UVI 6974 der Firma UCC) oder Ferroceniumhexafluorophosphat (z.B. Irgacure 261 der Firma Ciba Geigy).

Mit besonderem Vorteil werden als Photoinitiatoren komplexe Ferroceniumverbindungen verwendet, wobei als komplexes Anion Hexafluoroantimonat, Hexafluoroarsenat, Hexafluorophosphat, Tetrafluoroborat bevorzugt sind. Diese Photoinitiatoren gehören zu den Metallocenverbindungen, die in der EP-A-0 018 744 beschrieben sind, auf die hier vollinhaltlich Bezug genommen wird.

Als kationisch polymerisierbare Monomere werden erfindungsgemäß Epoxidgruppen-haltige Verbindungen eingesetzt, die mindestens eine und bis zu sechs Epoxidgruppen tragen und im wesentlichen aromatische, aliphatische oder cycloaliphatische Molekülreste besitzen.

Wegen ihrer erhöhten Reaktivität bei der kationischen Polymerisation sind cycloaliphatische Epoxidharze gegebenenfalls im Gemisch mit anderen Epoxidharztypen bevorzugt. Mit besonderem Vorzug werden Gemische von cycloaliphatischen Epoxidverbindungen eingesetzt. Hierbei hat es sich als besonders vorteilhaft erwiesen, Gemische zu verwenden, deren Hauptkomponente aus cycloaliphatischen Epoxyverbindungen mit einem mittleren Epoxyäquivalent von 120 bis 140 g besteht. Als weitere cycloaliphatische Epoxyverbindungen können solche mit Epoxyäquivalentmassen von 200 bis 3000 eingesetzt werden. Bei einer bevorzugten Ausführungsform der Erfindung wird als Hauptbestandteil der Zubereitungen das 3,4-Epoxycyclohexylmethyl-3',4'-epoxycyclohexancarboxylat in Verbindung mit kettenverlängerten cycloaliphatischen Epoxidharzen, hergestellt aus langkettigen Dicarbonsäuren und difunktionellen cycloaliphatischen Epoxidharzen, verwendet. Dabei betragen die Anteile dieser kettenverlängerten cycloaliphatischen Epoxidharze mit Epoxyäquivalentgewichten von 200 bis 3000 g 1 bis 70 und bevorzugt 10 bis 45 Masseteile in Prozent der Gesamtzubereitung.

Als Flexibilisierungsmittel im Sinne der Erfindung kommen Alkohole und Glykole, also Mono- Di- und Multialkohole, Polyalkoxyglykole, Polyesterpolyole, sowie deren Ester, Ether, Partialester und Partialether zum Einsatz. Die Molmasse der Flexibilisierungsmittel kann in einem Bereich von 200 bis 20.000 g/mol variieren, wobei der Bereich von 560 bis 7000 g/mol besonders bevorzugt ist.

Die Flexibilisierungsmittel können demgemäß Ethylenglykol und Glycerin sowie deren alkoxyverlängerte Derivate sein. Mit Vorteil werden die Polymerisationsprodukte von Alkoxiden und ggfs. cyclischen Ethern und Estern verwendet. Demgemäß sind Polyethylenglykole, Polypropylenglykole, Polytetrahydrofuranglykole, Polycaprolactonpolyole einsetzbar. Besonders bevorzugt sind Mischpolyetherpolyole, wie sie beispielsweise durch Polymerisation von Tetrahydrofuran und Ethylenoxid entstehen.

Nach einer speziellen Ausführungsform der Erfindung werden Mischpolyetherglykole, hergestellt durch kationische Polymerisation von Ethylenoxid und Tetrahydrofuran im Molverhältnis 1:2 bis 1:5 verwendet, die zur Erzielung besonderer Effekte vollständig oder partiell acyliert oder verethert werden können.

Hierbei hat sich die Umsetzung dieser Mischpolyether mit Acetanhydrid bzw. mit Methacrylsäureanhydrid besonders bewährt. Die partielle Acylierung oder Veretherung der Mischpolyether führt durch Beseitigung freier Hydroxylgruppen zu einer Verringerung der Hydrophilie, und dadurch lassen sich die beispielsweise mit Methacrylsäureanhydrid modifizierten Mischpolyetherglykole während der Polymerisations- bzw. Härtungsreaktion radikalisch einbauen.

Demnach können mit Vorzug als Flexibilisierungsmittel Copolyether der Molmassen von 4500 bis 20.000 g/mol mit Hydroxyl- und/oder Acyl- und/oder Etherendgruppen eingesetzt werden, wie sie in der DE-OS 43 24 322 beschrieben werden, auf die hier vollinhaltlich Bezug genommen wird.

Weiterhin können als Flexibilisierungsmittel die Umsetzungsprodukte von Carboxyl-terminierten Polyethern mit cycloaliphatischen Diepoxidharzen verwendet werden, wie sie aus der DE-OS 40 23 153, auf die

hier vollinhaltlich Bezug genommen wird, bekannt sind.

Als Flexibilisierungsmittel kommen auch aliphatische Diglycidether, wie beispielsweise Polypropylenglykoldiglycidether oder Polybutylenglykoldiglycidether in Betracht.

Weichmacher wie beispielsweise Phthalsäuredialkylester oder Polyphenylöle sind ebenfalls als Flexibilisierungsmittel einsetzbar.

Als Verzögerer im Sinne der Erfindung werden Verbindungen verstanden, die lichtinitiiert kationisch härtenden Zubereitungen zugesetzt werden und den Viskositätsanstieg dieser

Zubereitungen zeitlich hinauszögern, aber die vollständige Aushärtung der Zubereitung nicht verhindern.

Als Verzögerer sind erfindungsgemäß verschiedene Verbindungsklassen und Verbindungen einsetzbar, nämlich z. B.

a) reduzierend wirkende Substanzen wie Ascorbinsäure und Oxalsäure;

b) basische Substanzen oder mit basischen Substanzen behandelte Oberflächen wie Alkoholate und/oder Amine;

c) Wasser und/oder Alkohole;

d) Komplexbildner oder Chelatisierungsmittel, vorzugsweise solche, die aus den Verbindungsklassen der $\beta$-Diketone, 8-Hydroxychinoline und der davon abgeleiteten Verbindungen sowie der Oxime ausgewählt sind;

e) dreiwertige Phenole.

In der Gruppe der Komplexbildner und Chelatisierungsmittel sind Beispiele für geeignete Diketone: Acetylaceton, Dibutyrylmethan, Di(2,2-dimethylpropionyl)methan, Dipentanoylmethan, Benzoylaceton, Dibenzoylaceton, Dibenzoylmethan und Benzoyltrifluoraceton.

Die erfindungsgemäß als Verzögerer einzusetzenden in 8-Stellung substituierten Chinoline besitzen die allgemeine Formel

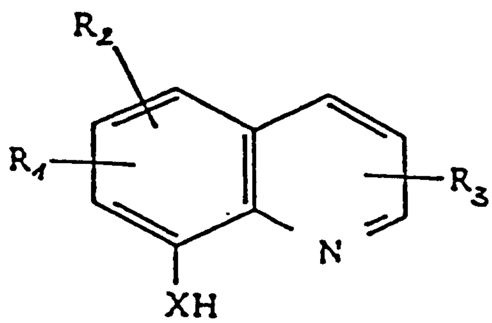

worin $R_1$, $R_2$ und $R_3$ unabhängig voneinander Wasserstoff, Halogen, Alkyl, Nitro, Nitroso, Sulfo und X entweder O, S oder NH bedeuten.

Neben dem bekannten "Oxin", dem 8-Hydroxychinolin, kommen demnach beispielsweise 2-Methyl-8-hydrorychinolin ("8-Hydroxychinaldin"), 5,7-Dichloro-8-hydroxychinolin, 5,7-Dinitro-8-hydrorychinolin, 4-Methyl-8-hydroxychinolin, 5-Methyl-8-hydroxychinolin und 8-Mercaptochinolin erfindungsgemäß als Verzögerer in Betracht.

Als Verzögerer mit Oximstruktur können hydroxysubstituierte Oxime wie beispielsweise Salicylaldoxim und $\alpha$-Benzoinoxim oder Dioxime wie beispielsweise Dimethylglyoxim und $\alpha$-Benzyldioxim verwendet werden.

Weiterhin können solche Chelatisierungsmittel erfindungsgemäß als Verzögerer eingesetzt werden, die als Schwermetallfänger in wäßrigen oder nicht-wäßrigen Systemen wirken und beispielsweise aus der US-A-4 500 494 bekannt sind. Typische Vertreter solcher Chelatisierungsmittel sind: Dithizon, Neocuproin, O-Phenanthrolin, N-Benzoyl-N-phenylhydroxylamin, Rhodamin B, Ethylendiamintetraessigsäure (EDTA) und ihre Salze, Nitrilotriessigsäure.

Als dreiwertige Phenole können Verbindungen der allgemeinen Formel

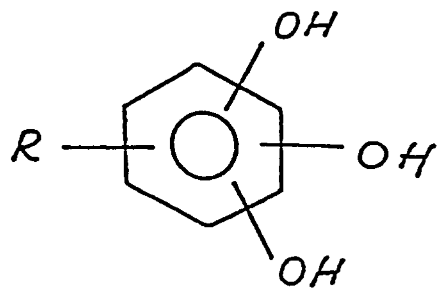

mit R = H, Alkyl oder COOH eingesetzt werden, wobei die Verwendung von Pyrogallol in Konzentrationen von 0,0001 bis 0,1 Teilen, ggfs. in Kombination mit anderen der vorgenannten Verzögerer, bevorzugt ist.

Für die Herstellung der erfindungsgemäßen Massen werden 8-Hydroxychinolin und seine Derivate bevorzugt.

Insbesondere hat sich 8-Hydroxychinolin ("Oxin") in Konzentrationen von 0,0001 bis 10 Masseteile in Prozent, bezogen auf die Gesamtzubereitung, und bevorzugt 0,001 bis 0,5 Masseteile in Prozent bewährt.

Eine der Komponenten oder auch sämtliche Komponenten können gegebenenfalls radikalisch polymerisierbare Monomere wie Monoacrylverbindungen, Monomethacrylverbindungen, Multiacrylverbindungen, Multimethacrylverbindungen oder Prepolymere mit Acryl- oder Methacrylgruppen enthalten.

Typische Monomere sind beispielsweise Isobornylacrylat, Isobornylmethacrylat, Hydroxypropylmethacrylat, Gamma-Methacryloxypropyltrimethoxysilan, Triethylenglykoldimethacrylat, Polybutylenglykoldi(meth-)acrylate, Trimethylolpropantriacrylat, Trimethylolpropantrimethacrylat, Pentaerythroltetraacrylat, Multi(meth-)acrylat des alkoxyverlängerten Pentaerythrols, Multiurethan(meth-)acrylate.

Als Beschleuniger im Sinne der Erfindung werden Verbindungen verstanden, die einzelne Teilschritte des Polymerisationsablaufes oder den gesamten Polymerisationsablauf beschleunigen. Diese Beschleuniger können beispielsweise Einfluß nehmen auf die Reaktion, die unter Einwirkung von Licht ablaufen und aus dem Photoinitiator die reaktiven Spezies entstehen lassen. Die erfindungsgemäß einzusetzenden Beschleuniger können aber auch die Einzelschritte der Anlagerung der Monomeren an die reaktiven Spezies beschleunigen.

Dementsprechend sind eine Reihe von Verbindungsklassen bzw. Verbindungen geeignet, eine Beschleunigung der kationischen Polymerisation von Epoxidgruppenhaltigen Massen zu bewirken. Im allgemeinen kann durch Zusatz von oxidierend wirkenden Verbindungen eine Beschleunigung der kationischen Polymerisation bewirkt werden. Dabei ist oft unklar, in welche Teilschritte des recht komplizierten Reaktionsablaufes der Beschleuniger eingreift. Die Wahl des Beschleunigers ist so zu treffen, daß andere negative Erscheinungen, wie beispielsweise eine Verringerung der Lagerstabilität durch Anstieg der Viskosität vor der Belichtung sicher verhindert werden.

Mit Vorteil werden in den erfindungsgemäßen Zubereitungen oxidative Beschleuniger aus der Reihe der Peroxide eingesetzt. Hierbei können die bekannten Klassen der organischen Peroxide, wie Hydroperoxide, Perester, Percarbonate, Diacylperoxide und Perketale verwendet werden. Die Auswahl der Peroxide richtet sich nach der Löslichkeit in der Epoxidzubereitung und der Lagerbeständigkeit dieser Zubereitungen bzw. des Peroxides in diesen Zubereitungen. Besonders bewährt haben sich Tertiärbutylperester und/oder organische Hydroperoxide wie beispielsweise Cumolhydroperoxid in Konzentrationen von 0,001 bis 10 Masseteilen in Prozent, bezogen auf die Gesamtzubereitung, und bevorzugt von 0,01 bis 5 Masseteilen in Prozent.

Die erfindungsgemäßen Zubereitungen können weiterhin Modifikatoren, wie Farbstoffe, Pigmente, Füllstoffe, Verstärkungsmittel, Thixotropiermittel, Initiatoren, Stabilisatoren, Inhibitoren und Haftvermittler enthalten, wobei die Stoffe, die eine starke Beeinträchtigung der Lichtdurchlässigkeit bewirken, bevorzugt in der bzw. den Komponenten eingesetzt werden, die den Bestandteil (A) nicht enthalten.

Typische Vertreter dieser Stoffe sind die Oxide des Eisens, Aluminiums, Titans und des Zinks; Kohlenstoff in Form von Graphit, Ruß, aber auch von Carbonfasern; Quarz, Glas, organische Farbstoffe, feindisperse Kieselsäuren, feindisperse organische hochpolymere Verbindungen wie beispielsweise Kautschuk oder Gummi, sowie Silikate und Alumosilikate.

Die Verwendung von Initiatoren, wie beispielsweise Photoinitiatoren, die unter Einwirkung von Licht im Wellenlängenbereich von 280 bis 650 nm Radikale bilden oder solchen Substanzen, die mit den Bestandteilen der anderen Komponenten Radikale liefernde Redox-Initiierungssysteme darstellen, ist ebenfalls möglich.

Die Zubereitungen können weiterhin Inhibitoren und Stabilisatoren wie Hydrochinon und Hydrochinonmonomethylether oder "gehinderte Phenole" wie beispielsweise 2,6-Ditert.-butyl-p-methylphenol sowie Haftvermittler wie beispielsweise Silane enthalten, wobei epoxidgruppenhaltige Silane besonders bevorzugt sind. Typische Vertreter der mit Vorteil einzusetzenden Silane sind Gamma-Glycidyloxypropyltrimethoxysilan Gamma-Glycidyloxypropyltriethoxysilan und Beta-3,4-Epoxycyclohexylethyltrimethoxysilan.

Die vorgenannten Verbindungen werden typischerweise in Konzentrationen von 0,01 bis 10 und bevorzugt von 0,1 bis 3,5 Gew.-% der Gesamtzubereitung eingesetzt.

Die einzelnen Bestandteile der kationisch härtenden Epoxidmassen können auf drei oder mehr Komponenten aufgeteilt werden, die getrennt voneinander gelagert und unmittelbar vor ihrer Anwendung miteinander in Kontakt gebracht werden können. Bevorzugt werden jedoch Zweikomponentenmassen, bei denen sämtliche Bestandteile auf insgesamt zwei Komponenten aufgeteilt sind.

Vorzugsweise enthält (enthalten) die den Bestandteil (A) enthaltende(n) Komponente(n) gleichzeitig den Bestandteil (D), d. h. einen oder mehrere Verzögerer.

Die Aufteilung der einzelnen Bestandteile auf die Komponenten der erfindungsgemäßen Massen kann ferner auf folgende unterschiedliche Weisen vorgenommen werden, nämlich so, daß mindestens eine Komponente welche nicht den Bestandteil (A) enthält, den Bestandteil (F), d. h. einen oder mehrere Beschleuniger, enthält; so, daß nur eine der mindestens zwei Komponenten den Bestandteil (B) enthält, oder so, daß mindestens zwei Kompenten den Bestandteil (B) enthalten; so, daß die Massen in mindestens einer ihrer Komponenten den Bestandteil (E), d. h. mindestens eine Art von radikalisch polymerisierbaren Monomeren, in einer Menge von 1 bis 99 %, bezogen auf die Gesamtmasse der jeweiligen Komponente, enthalten; so, daß die den Bestandteil (A) enthaltende(n) Komponente(n) jeweils 0,01 bis 5 % (A), bezogen auf die Gesamtmasse der jeweiligen Komponente, enthält (enthalten); so, daß mindestens eine der Komponenten den Bestandteil (C), d. h. mindestens ein Flexibilierungsmittel, in einer Menge von 5 bis 99,95 %, bezogen auf die Gesamtmasse der jeweiligen Komponente, enthält; so daß mindestens eine der Komponenten den Bestandteil (G), d. h. mindestens einen der ausgewählten Modifikatoren, in einer Menge von 0,1 bis 70 %, bezogen auf die Gesamtmasse der jeweiligen Komponente, enthält; so, daß die erste von insgesamt zwei Komponenten die Bestandteile (A) und (C) enthält, während die zweite Komponente den Bestandteil (B) enthält; oder so, daß die erste von insgesamt zwei Komponenten aus den Bestandteilen (A), (C) und (E) besteht, während die zweite Komponente aus (B) sowie den Bestandteilen (C), (D), (E), (F) und/oder (G) besteht.

Bevorzugt ist eine Aufteilung der Bestandteile in der Art, daß die erste Komponente

- Photoinitiatoren (geeignet zur Bildung reaktiver kationischer Spezies)
- mindestens ein Flexibilisierungsmittel
- einen oder mehrere Verzögerer
- ggfs. einen geringen Anteil, nämlich höchstens 20 %, und vorzugsweise höchstens 2 % der kationisch polymerisierbaren epoxidgruppenhaltigen Monomeren
- sowie gegebenenfalls radikalisch polymerisierbare Monomere

enthält, während die zweite Komponente gebildet wird aus

- der Hauptmenge der kationisch polymerisierbaren epoxidgruppenhaltigen Monomeren
- mindestens einem Beschleuniger
- sowie gegebenenfalls Modifikatoren wie Farbstoffen, Pigmenten, Füllstoffen, Verstärkungsmitteln, Thixotropiermitteln, Initiatoren, Stabilisatoren, Inhibitoren und Haftvermittlern.

Initiatoren, Inhibitoren, Stabilisatoren, Haftvermittler und sonstige Modifikatoren können jedoch auch in beiden Komponenten enthalten sein.

Ein besonderer Vorteil dieser bevorzugten Variante der Erfindung besteht darin, daß eine photoaktivierte Komponente mit sehr hoher Lagerbeständigkeit zur Verfügung gestellt werden kann, die in einem weiten Bereich von Mischungsverhältnissen, beispielsweise von 1 : 20 bis 20 : 1, und vorzugsweise von 1 : 5 bis 5 : 1 der zweiten Komponente, die eine sehr hohe Lagerbeständigkeit aufweist und nicht lichtempfindlich ist, zugemischt werden kann.

Die Erfindung betrifft ferner ein Verfahren zur Herstellung von kationisch gehärteten Massen, das dadurch gekennzeichnet ist, daß eine mindestens zweikomponentige kationisch härtende Epoxidmasse derjenigen vorstehend beschriebenen Ausführungsformen zubereitet wird, bei denen die Komponente (A) Verbindungen enthält, die unter der Einwirkung von Licht Lewis-Säuren und/oder Brönsted-Säuren erzeugen, wobei die den Bestandteil (A) enthaltende(n) Komponente(n) durch Bestrahlung mit Licht im Wellenlängenbereich von 280 bis 650 nm aktiviert und die weitere(n) Komponente(n) während oder nach der Bestrahlung mit der (den) aktivierten Komponente(n) in Kontakt gebracht wird (werden), worauf die Massen innerhalb eines Zeitraums von zwischen 1 und 1000 Sekunden, vorzugsweise zwischen 10 und 200 Sekunden, aushärten. Für die Bestrahlung wird dabei vorzugsweise sichtbares Licht verwendet. Ferner wird

bevorzugt, daß die photoaktivierte(n) Komponente(n) nach einer Lagerzeit von 100 Sekunden bis 90 Tagen mit der mindestens einen weiteren Komponente in Kontakt gebracht wird (werden).

Schließlich betrifft die Erfindung ein Verfahren zur Herstellung von kationisch gehärteten Massen, das dadurch gekennzeichnet ist, daß eine mindestens zweikomponentige kationisch härtende Epoxidmasse derjenigen vorstehend beschriebenen Ausführungsformen zubereitet wird, bei denen die Komponente (A) Lewis-Säuren und/oder Brönsted-Säuren in freier Form oder in Form ihrer Anlagerungskomplexe enthält, wobei die den Bestandteil (A) enthaltende(n) Komponente(n) ohne Photoaktivierung mit der (den) weiteren Komponente(n) in Kontakt gebracht wird (werden), worauf die Massen innerhalb eines Zeitraums von zwischen 1 und 1000 Sekunden, vorzugsweise zwischen 10 und 200 Sekunden, aushärten.

Bei allen Varianten des erfindungsgemäßen Verfahrens können die Massen mit Vorteil nach ihrer Aushärtung einer Nachhärtung unterworfen werden, wenngleich dies nicht in jedem Falle erforderlich ist. Wenn eine Nachhärtung erfolgt, kann sie mit Hilfe von Licht und/oder von Wärme erfolgen.

Die Belichtung bzw. Photoaktivierung der den Bestandteil (A) enthaltenden Komponente(n) gemäß der zweiten und dritten Ausführungsform der Erfindung kann diskontinuierlich in einem eine Durchlaufstrecke bildenden Reaktor oder chargenweise durchgeführt werden, oder sie kann kontinuierlich in einem eine Durchlaufstrecke bildenden Reaktor durchgeführt werden. Bevorzugt wird eine Photoaktivierung, bei der die erste Komponente durch eine Belichtungsstrecke aus einem lichtdurchlässigen Kunststoff geführt wird, die gleichzeitig als statischer Mischer ausgebildet sein kann.

Die aktivierte 1. Komponente kann in unterschiedlicher Weise mit der 2. Komponente vermischt werden, wie beispielsweise in Kleinansätzen per Hand, über mechanische Mischeinrichtungen per Hand, über mechanische Mischeinrichtungen mit bewegten Mischelementen oder durch Auftrag der beiden Komponenten neben- oder übereinander und partielle Mischung infolge des Fügevorganges. Die photoaktivierte(n) Komponente(n) wird (werden) vorzugsweise bei oder nach dem Verlassen der Belichtungseinrichtung mit der mindestens einen weiteren Komponente in Kontakt gebracht.

Als besonders vorteilhaft hat sich die Vermischung der voraktivierten 1. Komponente mit der lichtunempfindlichen 2. Komponente in einem statischen Mischer erwiesen, wobei dieser Mischer relativ wenig Mischelemente enthalten muß, da die Anforderungen an die Mischgüte gering sind.

Ein großer technischer Vorteil des erfindungsgemäßen Verfahrens ist die Herstellbarkeit lichtaktivierter, stark pigmentierter und selbst schwarzer, völlig lichtundurchlässiger Zubereitungen.

Mit diesen Massen lassen sich verlauffeste und verstärkte Klebstoffe, aber auch stark gefärbte Beschichtungen, einschließlich reinweißer Veredelungsschichten, realisieren.

Nach einer weiteren bevorzugten Ausführungsform der Erfindung enthält die erste Komponente

- mindestens eine Lewis- und/oder Brönsted-Säure und mindestens einen Photoinitiator
- mindestens ein Flexibilisierungsmittel
- ggfs. kationisch und/oder radikalisch polymerisierbare Monomere, Verzögerer und Modifikatoren, während die zweite Komponente
- die Hauptmenge der kationisch polymerisierbaren Monomeren
- ggfs. Flexibilisierungsmittel, Beschleuniger, radikalisch polymerisierbare Monomere und Modifikatoren,

enthält,
wobei beide Komponenten im Verhältnis 1:20 bis 20:1 und vorzugsweise 1 : 5 bis 5 : 1 vermischt werden.

Dabei erweist es sich als sehr großer Vorteil, daß das Mischungsverhältnis beider Komponenten in einem weiten Bereich variiert werden kann, ohne daß dadurch die Endaushärtung verhindert wird. Durch die Variation des Mischungsverhältnisses können die Reaktivität der gemischten Zubereitung sowie die Zusammensetzung und damit die Eigenschaften der ausgehärteten Zubereitung auf gewünschte Werte eingestellt werden.

Die gute Lagerstabilität der sofort einsetzbaren Komponenten stellt einen großen Vorteil der ersten und vierten Ausführungsform dar und ermöglicht die Verarbeitung in Zweikomponenten("2K")-Dosiereinrichtungen, wie sie beispielsweise für additionshärtende Systeme verwendet werden.

Die Verarbeitung der erfindungsgemäßen 2K-Zubereitungen kann aber auch nach den sogenannten No-Mix-Varianten der Verarbeitung erfolgen, bei denen durch eine partielle Vermischung beider Komponenten infolge des Fügevorgangs die schnelle Polymerisation ausgelöst wird.

Die Verarbeitung der erfindungsgemäßen Zubereitungen kann auch über Doppelkammerkartuschen mit aufgesetztem statischen Mischer erfolgen, wobei das Mischungsverhältnis der Komponenten konstruktiv auf 1:1 bis 1:20 eingestellt werden kann.

Ein großer technischer Vorteil auch dieser bevorzugten Variante ist die Herstellbarkeit sehr reaktiver, stark pigmentierter und auch schwarzer, völlig lichtundurchlässiger Zubereitungen.

Die erfindungsgemäßen, kationisch härtenden Epoxidmassen werden vorzugsweise zum Verkleben, Vergießen, Abdichten und Beschichten von Substraten aus Papier, Holz, Kunststoff, Metall, Glas, Keramik

und Verbundwerkstoffen aller Art verwendet.

Die Erfindung wird nachfolgend anhand von Ausführungsbeispielen für Zweikomponentenmassen näher erläutert; dabei sind die Beispiele 1 bis 6, 33 bis 38 und 63 bis 68 Beispiele für die jeweils erste Komponente, die Beispiele 7 bis 12, 39 bis 44 und 69 bis 74 Beispiele für die jeweils zweite Komponente und die Beispiele 13 bis 32, 45 bis 62 und 75 bis 93 Beispiele für 2K-Systeme, zusammengestellt aus den zuvor beschriebenen Einzelkomponenten.

Beispiele 1 bis 6 (1. Komponenten)

Durch Vermischen der in Tabelle 1 aufgeführten Verbindungen wurden die Zubereitungen für die jeweils ersten Komponenten, entsprechend den Beispielen 1 bis 6, hergestellt.

Alle Zubereitungen enthalten Photoinitiatoren, wobei die Photoinitiatoren in Form 50%-iger Lösungen in Propylencarbonat dem Gemisch der anderen Verbindungen in völliger Dunkelheit zugegeben und eingemischt wurden.

Danach wurden die so bereiteten ersten Komponenten in lichtundurchlässige Behälter abgefüllt.

Beispiele 7 bis 12 (2. Komponenten)

Durch Vermischen der in Tabelle 2 aufgeführten Verbindungen wurden die erfindungsgemäßen Zubereitungen der zweiten Komponenten hergestellt.

Beispiele 13 bis 30 (2K-Systeme)

Aus den Komponenten 1 und 2 gemäß den Beispielen 1 bis 12 wurden die in Tabelle 3 zusammengestellten Kombinationen von den ersten und zweiten Komponenten realisiert.

Zur Bestimmung der Reaktivität der gemischten Massen wurde auf silikonisiertes Papier ein Tropfen von 0,2 g der jeweiligen 1. Komponente aufgetragen und dieser Tropfen unter der Belichtungseinrichtung Delo-Lux 03 (320 - 600 nm) der Firma Delo-Industrieklebstoffe aktiviert. Diese Belichtungszeit wurde in einem weiten Bereich variiert und ist in Tabelle 3 angegeben.

Die 1. Komponenten waren nach der Aktivierung noch flüssig. Sie wurden mit den jeweiligen zweiten Komponenten im angegebenen Massenverhältnis mittels eines Spatels vermischt und die Zeit bis zum Polymerisationsbeginn (Viskositätsanstieg, Fädenziehen) visuell bestimmt.

Dieser Polymerisationsbeginn kann mit einer Reproduzierbarkeit von ± 15 % bestimmt werden.

Als Polymerisationsende wird der Zeitpunkt angesehen, bei dem die innere Festigkeit der Masse so hoch ist, daß sie einer Deformation mit einem Spatel erheblichen Widerstand entgegensetzt. Dieser Zeitpunkt entspricht etwa der "Handfestigkeit" von Verklebungen. Die Reproduzierbarkeit dieses Kennwertes liegt bei ± 25 %.

Aus Tabelle 3 ist ersichtlich, daß die Reaktivität der gemischten Massen in einem weiten Bereich eingestellt werden kann.

Bei Bedarf sind über diese Verfahrensweise auch extrem schnelle 2K-Epoxy-Systeme zu formulieren. Hierbei wird die technisch zu realisierende Geschwindigkeit nicht durch das chemische System, sondern durch die notwendigen mechanischen Schritte Mischen, Auftragen und Fügen begrenzt.

Beispiel 31

0,2 g einer die 1. Komponente bildenden Zubereitung, bestehend aus:

a) 1,5 Masseteile in Prozent einer 50 %igen Lösung von $\eta^5$-2,4- Cyclopentadien-1-yl[(1,2,3,4,5,6-)-1-methylethylbenzol]- eisen(1 + )-hexafluoroantimonat in Propylencarbonat

b) 96,48 Masseteile in Prozent eines Mischpolyethers aus Tetrahydrofuran und Ethylenoxid im Verhältnis 3,8:1 mit einer Molmasse von 6150 g/mol

c) 0,02 Masseteile in Prozent 8-Hydroxychinolin

d) 2 Masseteile in Prozent 3,4-Epoxycyclohexylmethyl-3',4'-epoxycyclohexylcarboxylat,

wurden unter der Belichtungseinrichtung Delo-Lux 03 (320 - 600 nm) unterschiedlich lange belichtet. Nach der Belichtung wurde die aktivierte Zubereitung im Verhältnis 1:1 mit einer 2. Komponente, bestehend aus:

f) 99,5 Masseteile in Prozent 3,4 Epoxycyclohexylmethyl-3',4',- epoxycyclohexylcarboxylat

g) 0,5 Masseteile in Prozent tert.-Butylperbenzoat,

mit dem Spatel vermischt. Es wurde, wie bei den Beispielen 11 bis 30 angegeben, die Zeit bis zum Beginn der Polymerisation und die Zeit bis zum Polymerisationsende des Gemisches gemessen. Die Ergebnisse

dieser Untersuchungen sind in Tabelle 4 zusammengefaßt; daraus ist zu erkennen, daß die Reaktivität der aktivierten 1. Komponente ab einer Belichtungszeit von etwa 20 Sekunden sehr hoch ist und keine Reaktivitätsminderung infolge Überbelichtung eintritt. Die aktivierte 1. Komponente zeigt einen nur sehr geringen Viskositätsanstieg (10 %) gegenüber der unbelichteten Komponente.

Beispiel 32

2 g der 1. Komponente gemäß Beispiel 31 wurden in eine 2 ml-Spritze aus einem lichtdurchlässigen Kunststoff gefüllt und die Zubereitung in der Spritze durch 300 Sekunden Belichtung unter der Lampe Delo-Lux 03 (320 - 600 nm) aktiviert. Aus der Spritze wurden in zeitlichen Abständen Teilmengen ausgedrückt und diese mit der 2. Komponente gemäß Beispiel 32 mit dem Spatel vermischt.

Die ermittelten Zeiten bis zum Polymerisationsbeginn und dem Polymerisationsende der Mischung sind in Tabelle 5 zusammengestellt. Aus Tabelle 5 ist ersichtlich, daß die Reaktivität der aktivierten 1. Komponente auch nach einer langen Lagerzeit nicht abnimmt.

Beispiele 33 bis 38 (1. Komponenten)

Durch Vermischen der in Tabelle 6 aufgeführten Verbindungen wurden die Zubereitungen (1. Komponenten) entsprechend den Beispielen 33 bis 38 hergestellt.

Beispiele 39 bis 44 (2. Komponenten)

Durch Vermischen der in Tabelle 7 aufgeführten Verbindungen wurden die Zubereitungen der zweiten Komponenten hergestellt.

Beispiele 45 bis 62 (2K-Systeme)

Aus den Zubereitungen gemäß den Beispielen 33 bis 44 wurden die in Tabelle 8 zusammengestellten Kombinationen aus ersten und zweiten Komponenten realisiert.

Aus den Ergebnissen der Ausprüfung gemäß Tabelle 8 ist zu erkennen, daß die Reaktivität der Massen in einem weiten Bereich eingestellt werden kann.

Die gemischten Massen eignen sich prinzipiell für das Verkleben, Vergießen, Beschichten und Abdichten, wobei die Zusammensetzung der Komponenten dem jeweiligen Einsatzgebiet angepaßt werden kann.

Beispiele 63 bis 68 (1. Komponenten)

Durch Vermischen der in der Tabelle 9 aufgeführten Verbindungen wurden die Zubereitungen (1. Komponenten) entsprechend den Beispielen 63 bis 68 hergestellt. Die an diesen Zubereitungen ermittelten Dichten sind ebenfalls in Tabelle 9 erfaßt.

Beispiele 69 bis 74 (2. Komponenten)

Durch Vermischen der in Tabelle 10 aufgeführten Verbindungen wurden die Zubereitungen (2. Komponenten) entsprechend den Beispielen 69 bis 74 hergestellt.

Beispiele 75 bis 92 (2 K - Systeme)

Die Zubereitungen gemäß den Beispielen 63 bis 74 wurden entsprechend den in Tabelle 11 zusammengestellten Kombinationen und Volumenverhältnissen (1:1 und 1:2) in Doppelkammerkartuschen abgefüllt.

Der Inhalt der Doppelkammerkartuschen wurde über einen statischen Mischer ausgebracht, und die in Tabelle 11 zusammengestellten Reaktionszeiten ermittelt. Dabei stellen die ausgehärteten Massen nach den Beispielen 75 bis 83 stark gefüllte Vergußmassen dar, während die Zubereitungen nach den Beispielen 84 bis 92 als klare Klebstoffe, Verguß- und Beschichtungsmaterialien mit sehr guter Haftung auf Kunststoffen eingesetzt werden können.

## Tabelle 1: Zusammensetzung der erfindungsgemäßen 1. Komponenten

| Bestandteil gem. Kennzeichen | Bestandteile der Massen | Zusammensetzung / Masseteile in Prozent / Beispiel-Nr. | | | | | |
|---|---|---|---|---|---|---|---|
| | | 1 | 2 | 3 | 4 | 5 | 6 |
| (A) | n5-2,4-Cyclopentadien-1-yl [(1,2,3,4,5,6-)-(1-methylethyl)-benzol]-eisen (1+) hexafluoroantimonat, 50 %ig in Propylencarbonat | 1,5 | 2,95 | 3,1 | 3,0 | 2,95 | 1,8 |
| (C) | - Mischpolyether aus Tetrahydrofuran und Ethylenoxid im Verhältnis 3,7:1 mit einer Molmasse von 6000 g/mol | 96,3 | 94,32 | 92,01 | 97,0 | - | - |
| (D) | 8-Hydroxychinolin | 0,05 | - | 0,09 | - | 0,02 | 0,05 |
| | 2-Methyl-8-hydroxychinolin | | 0,02 | - | - | - | - |
| | Ethylendiamintetraessigsäure | 0,01 | 0,01 | - | - | - | 0,01 |
| (B) | 3,4-Epoxycyclohexylmethyl-3',4'-epoxy-cyclohexylcarboxylat | 2,14 | - | 4,8 | - | 2,2 | - |
| | Beta-3,4-Epoxycyclohexylethyltrimethoxysilan | - | 2,7 | - | - | 1,2 | 1,9 |
| (E) | - Dimethacrylat des Mischpolyethers aus Tetrahydrofuran und Ethylenoxid im Verhältnis 3,6:1 mol einer Molmasse von 6200 g/mol | | | | | 93,63 | 64,14 |
| | - Tetraacrylat eines alkoxyverlängerten Pentaerythrols (Molmasse: 800 g/mol) | | | | | | 32,0 |
| (G) | 2,6-Ditert.butyl-4-methylphenol | | | | | | 0,1 |

## Tabelle 2: Zusammensetzung der erfindungsgemäßen 2. Komponenten

| Bestandteil gem. Kennzeichen | Bestandteile der Massen | Zusammensetzung / Masseteile in Prozent / Beispiel-Nr. | | | | | |
|---|---|---|---|---|---|---|---|
| | | 7 | 8 | 9 | 10 | 11 | 12 |
| (B) | 3,4-Epoxycyclohexylmethyl-3'4'-epoxy-cyclohexylcarbonat | 92,15 | 91,5 | - | 35,4 | 98,3 | 67,19 |
| | Beta-3,4-Epoxycyclohexylethyltrimethoxysilan | 2,0 | - | - | 2,6 | 1,5 | 1,2 |
| | Bisphenol A-diglycidether | - | - | 91,0 | - | - | - |
| | Novolak-Epoxidharz | - | - | - | 57,3 | - | - |
| (D) | 8-Hydroxychinolin | 0,02 | 0,01 | - | - | - | 0,01 |
| (F) | Cumolhydroperoxid (80%-ig in Cumol) | 5,83 | - | - | - | - | - |
| | Tertiärbutylperbenzoat | - | 6,0 | 6,1 | 4,7 | 0,2 | 0,6 |
| (G) | Titanoxid (Rutil) | - | | - | - | - | 26,7 |
| | Feindisperse Kieselsäure (Aerosil R 202, Degusssa) | - | 2,49 | 2,9 | - | - | 4,3 |

Tabelle 3

| Ergebnisse der Ausprüfung der erfindungsgemäßen Zubereitungen gemäß Tabellen 1 und 2 | | | | | | |
|---|---|---|---|---|---|---|
| Erfindungsbeispiel Nr. | Komponente 1 entsprechend Beispiel Nr. | Komponente 2 entsprechend Beispiel Nr. | Belichtungszeit der Komponente 1 sec | Mischungsverhältnis (Masseteile) | Polymerisationsbeginn sec | Polymerisationsende sec. |
| 13 | 1 | 8 | 35 | 1:1 | 60 | 100 |
| 14 | 1 | 11 | 300 | 1:1 | 15 | 18 |
| 15 | 1 | 12 | 300 | 1:1 | 16 | 22 |
| 16 | 2 | 7 | 60 | 1:2 | 34 | 45 |
| 17 | 2 | 8 | 300 | 1:1 | 37 | 53 |
| 18 | 2 | 12 | 300 | 1:1 | 54 | 90 |
| 19 | 3 | 9 | 300 | 2:1 | 35 | 45 |
| 20 | 3 | 10 | 60 | 1:1 | 50 | 95 |
| 21 | 3 | 11 | 30 | 1:1 | 60 | 110 |
| 22 | 4 | 8 | 15 | 1:1 | 40 | 50 |
| 23 | 4 | 11 | 300 | 1:1 | 45 | 70 |
| 24 | 4 | 12 | 300 | 1:1 | 35 | 45 |
| 25 | 5 | 8 | 60 | 1:1 | 38 | 60 |
| 26 | 5 | 10 | 60 | 1:1 | 150 | 320 |
| 27 | 5 | 11 | 60 | 1:1 | 55 | 140 |
| 28 | 6 | 8 | 60 | 1:1 | 2 | 4 |
| 29 | 6 | 11 | 60 | 1:2 | 10 | 320 |
| 30 | 6 | 11 | 60 | 1:3 | 10 | 900 |

Tabelle 4

| Aktivierungszeit / sec | Polymerisationsbeginn / sec | Polymerisationsende / sec |
|---|---|---|
| 0 | keine Polymerisation | |
| 2 | 1800 | 3000 |
| 5 | 420 | 1200 |
| 10 | 240 | 780 |
| 15 | 180 | 660 |
| 20 | 80 | 120 |
| 60 | 30 | 45 |
| 300 | 5 | 8 |

Tabelle 5

| Lagerzeit nach Belichtung / Stunden | Polymerisationsbeginn / sec | Polymerisationsende / sec |
|---|---|---|
| 0 | 55 | 110 |
| 1 | 50 | 105 |
| 2 | 45 | 70 |
| 3 | 40 | 60 |
| 24 | 45 | 60 |
| 48 | 40 | 60 |
| 72 | 40 | 60 |
| 240 | 40 | 60 |

Tabelle 6: Zusammensetzung der erfindungsgemäßen Zubereitung (1. Komponente)

| Bestand-teil gemäß Kenn-zeichen | Bestandteile der Massen | Zusammensetzung/Masseteile in Prozent/Beispiel-Nr. | | | | | |
|---|---|---|---|---|---|---|---|
| | | 33 | 34 | 35 | 36 | 37 | 38 |
| (A) | - Hexafluoroantimonsäure-Monohydrat<br>- Borfluorid-Tetrahydrofuran-Komplex<br>- Irgacure 261 (Ciba-Geigy)<br>- irgacure 184 (Ciba-Geigy) | 0,4<br>-<br>0,2<br>-<br>- | 0,5<br>-<br>-<br>-<br>- | 0,25<br>0,30<br>-<br>-<br>- | 0,45<br>-<br>-<br>0,5<br>- | 0,25<br>-<br>-<br>-<br>- | -<br>0,85<br>0,1<br>-<br>- |
| (C) | - Polycaprolacton-triol (M=1000)<br>- Polybutylenglykoi-diglycidether (M=800)<br>- Mischpolyether-6000-diol<br>- Mischpolyether-6000-diacetat | 38,7<br>10,4<br>-<br>50,28 | -<br>-<br>97,49<br>- | -<br>-<br>-<br>- | -<br>-<br>-<br>- | -<br>-<br>98,83<br>- | -<br>-<br>99,05<br>- |
| (D) | 8-Hydroxychinolin | 0,02 | 0,01 | - | - | - | - |
| (B) | 3,4-Epoxycyclohexylmethyl-3'4'-epoxy-cyclohexylcarboxylat | - | 2,0 | 1,2 | - | 0,9 | - |
| (E) | - Mischpolyether-6000-dimethacrylat<br>- Tetraacrylat eines alkoxyverlängerten Pentaerythrols mit einer Molmasse von 800 g/mol<br>- 2,6-Ditert.butyl-4-methylphenol | -<br>-<br>- | -<br>-<br>- | 77,2<br>20,0<br>0,05 | 99,0<br>-<br>0,05 | -<br>-<br>0,02 | -<br>-<br>- |

Tabelle 7: Zusammensetzung der erfindungsgemäßen Zubereitung (2.Komponenten)

| Bestandteil gemäß Kennzeichen | Bestandteile der Massen | Zusammensetzung/Masseteile in Prozent/Beispiel-Nr. | | | | | |
|---|---|---|---|---|---|---|---|
| | | 39 | 40 | 41 | 42 | 43 | 44 |
| (B) | - 3,4-Epoxycyclohexylmethyl-3',4'epoxy-cyclohexylcarboxylat | 47,8 | 52,3 | 41,6 | 97,5 | 93,8 | 64,8 |
| | - Beta-3,4-Epoxycyclohexylethyl-trimethoxysilan | 1,9 | - | 2,3 | 1,0 | 1,7 | 1,8 |
| | - Umsetzungsprodukt von PTHF-1100-dipropionsäure (BASF) mit 3',4'-Epoxy-cyclohexylmethyl-3,4 epoxycyclohexyl-carboxylat | 20,7 | - | 52,0 | - | - | - |
| | - Glycidyloxypropyltrimethoxysilan | - | 3,2 | - | 1,3 | - | - |
| (F) | Cumolhydroperoxid (80%ig in Cumol) | 4,2 | - | - | - | - | - |
| | Tertiärbutylperbenzoat | - | 6,1 | 2,0 | 0,2 | - | - |
| (G) | Quarzmehl | 20,3 | - | - | - | - | - |
| | Feindisperse Kieselsäure (R 202, Degussa) | 5,1 | 6,3 | 2,1 | - | 4,5 | 5,3 |
| | Titandioxid (Rutil) | - | 32,1 | - | - | - | 28,1 |

Tabelle 8

| Ergebnisse der Ausprüfung der erfindungsgemäßen Zubereitungen gemäß Tabellen 6 und 7 | | | | | |
|---|---|---|---|---|---|
| Erfindungsbeispiel Nr. | Komponente 1 entsprechend Beispiel Nr. | Komponente 2 entsprechend Beispiel Nr. | Mischungsverhältnis | Polymerisationsbeginn sec | Polymerisationsende sec |
| 45 | 33 | 41 | 1 : 1 | 90 | 1000 |
| 46 | 33 | 42 | 1 : 1,5 | 60 | 110 |
| 47 | 33 | 43 | 1 : 1 | 40 | 60 |
| 48 | 34 | 39 | 1 : 1 | 20 | 20 |
| 49 | 34 | 41 | 1 : 1 | 20 | 28 |
| 50 | 34 | 44 | 1 : 1 | 26 | 30 |
| 51 | 35 | 42 | 1 : 2 | 35 | 75 |
| 52 | 35 | 43 | 1 : 3 | 35 | 60 |
| 53 | 35 | 43 | 1 : 2 | 34 | 60 |
| 54 | 36 | 41 | 1 : 1 | 600 | a) |
| 55 | 36 | 43 | 1 : 1 | 360 | a) |
| 56 | 36 | 43 | 2 : 1 | 420 | a) |
| 57 | 37 | 39 | 1 : 1 | 55 | 80 |
| 58 | 37 | 40 | 1 : 1 | 280 | 780 |
| 59 | 37 | 43 | 1 : 1 | 30 | 40 |
| 60 | 38 | 41 | 1 : 1 | 30 | 39 |
| 61 | 38 | 42 | 1 : 1 | 10 | 15 |
| 62 | 38 | 43 | 1 : 1 | 9 | 14 |

a) Aushärtung unter der Lampe Delo-Lux 03 der Firma Delo-Industrieklebstoffe bei einer Belichtungszeit vom 120 sec.

## Tabelle 9: Zusammensetzung der erfindungsgemäßen 1. Komponenten

| Bestandteil gem. Kennzeichen | Bestandteile der Massen | Zusammensetzung / Masseteile in Prozent / Beispiel-Nr. | | | | | |
|---|---|---|---|---|---|---|---|
| | | 63 | 64 | 65 | 66 | 67 | 68 |
| (A) | - Trisarylsulfonium-Hexafluoroantimonat<br>- Hexafluoroantimonsäure-Monohydrat<br>- η5-2,4-Cyclopentadien-1-yl [(1,2,3,4,5,6-)-(1-methylethyl)-benzol]-eisen (1+) hexafluorophosphat, 50 %ig in Propylencarbonat | -<br>0,30<br>-<br>0,60 | -<br>- 0,30<br>-<br>0,58 | -<br>0,30<br>-<br>0,59 | -<br>0,30<br>-<br>0,58 | -<br>0,40<br>-<br>0,52 | 0,5<br>0,31<br>-<br>0,57 |
| (C) | - Mischpolyether aus Tetrahydrofuran und Ethylenoxid im Verhältnis 3,6:1 mit einer Molmasse von 6100 g/mol | 57,7 | 68,518 | 77,61 | 97,92 | 97,98 | 97,62 |
| (D) | - 8-Hydroxychinolin | - | 0,02 | - | - | - | - |
| (B) | - Beta-3,4-Epoxycyclohexylethyltrimethoxysilan | 0,3 | - | 0,6 | - | - | - |
| (G) | - Quarzmehl<br>- Feindisperse Kieselsäure | 40,1<br>1,0 | 29,7<br>0,9 | 19,8<br>1,1 | -<br>1,2 | -<br>1,1 | -<br>1,0 |
| Dichte der Komponente g/cm³ | | 1,277 | 1,203 | 1,132 | 1,006 | 1,004 | 0,996 |

## Tabelle 10: Zusammensetzung der erfindungsgemäßen 2. Komponenten

| Bestandteil gem. Kennzeichen | Bestandteile der Massen | Zusammensetzung / Masseteile in Prozent / Beispiel-Nr. | | | | | |
|---|---|---|---|---|---|---|---|
| | | 69 | 70 | 71 | 72 | 73 | 74 |
| (B) | - 3,4-Epoxycyclohexylmethyl-3',4'-epoxy-cyclohexylcarbonat | 51,798 | 43,197 | 37,9 | 94,5 | 96,1 | 66,8 |
| | - Beta-3,4-Epoxycyclohexylethyltrimethoxysilan | 1,2 | - | 2,0 | - | 0,8 | 1,0 |
| (C) | - Mischpolyether, Molmasse 6100 g/mol | - | - | - | - | - | 30,2 |
| (D) | - 8-Hydroxychinolin | 0,007 | 0,003 | - | - | - | - |
| (F) | - Cumolhydroperoxid (80%-ig in Cumol) | - | 0,3 | - | 0,5 | - | - |
| (G) | - Quarzmehl | 45,0 | 54,9 | 58,1 | - | - | - |
| | - Feindisperse Kieselsäure | 2,0 | 1,9 | 2,0 | 5,0 | 3,1 | 2,0 |
| Dichte der Komponente $g/cm^3$ | | 1,463 | 1,574 | 1,639 | 1,146 | 1,159 | 1,107 |

Tabelle 11

Ergebnisse der Ausprüfung der erfindungsgemäßen Zubereitungen gemäß Tabellen 9 und 10

| Erfindungsbeispiel Nr. | Komponente 1 entsprechend Beispiel Nr. | Komponente 2 entsprechend Beispiel Nr. | Mischungsverhältnis (Volumenteile) | Polymerisationsbeginn sec. | Polymerisationsende sec. |
|---|---|---|---|---|---|
| 75 | 63 | 69 | 1:1 | 300 | 700 |
| 76 | 63 | 70 | 1:1 | 200 | 310 |
| 77 | 63 | 71 | 1:1 | 340 | 780 |
| 78 | 64 | 69 | 1:1 | 120 | 270 |
| 79 | 64 | 70 | 1:1 | 250 | 920 |
| 80 | 64 | 71 | 1:1 | 270 | 980 |
| 81 | 65 | 69 | 1:1 | 90 | 140 |
| 82 | 65 | 70 | 1:1 | 150 | 910 |
| 83 | 65 | 71 | 1:1 | 180 | 720 |
| 84 | 66 | 72 | 1:2 | 70 | 180 |
| 85 | 66 | 73 | 1:2 | 45 | 120 |
| 86 | 66 | 74 | 1:2 | 100 | 140 |
| 87 | 67 | 72 | 1:2 | 25 | 35 |
| 88 | 67 | 73 | 1:2 | 30 | 60 |
| 89 | 67 | 74 | 1:2 | 45 | 55 |
| 90 | 68 | 72 | 1:2 | 15 | 35 |
| 91 | 68 | 73 | 1:2 | 60 | 80 |
| 92 | 68 | 74 | 1:2 | 30 | 50 |

**Patentansprüche**

1. Kationisch härtende Epoxidmassen, bestehend aus
   (A) Lewis-Säuren und/oder Brönsted-Säuren
   (B) Kationisch polymerisierbaren epoxidgruppenhaltigen Monomeren
   sowie mindestens einem der weiteren Bestandteile
   (C) Flexibilisierungsmittel
   (D) Verzögerer
   (E) Radikalisch polymerisierbare Monomere
   (F) Beschleuniger
   (G) Modifikatoren, ausgewählt aus der aus Farbstoffen, Pigmenten, Füllstoffen, Verstärkungsmitteln, Thixotropiermitteln, Initiatoren, Stabilisatoren, Inhibitoren und Haftvermittlern bestehenden Gruppe,
   wobei die Bestandteile (A), (B) und die aus der Gruppe (C) bis (G) ausgewählten Bestandteile auf mindestens zwei Komponenten derart aufgeteilt sind, daß die mindestens eine Komponente, die den Bestandteil (A) enthält, höchstens 20 % Bestandteil (B), bezogen auf die Gesamtmasse der jeweiligen, den Bestandteil (A) enthaltenden Komponente, enthält, und daß die Komponenten getrennt voneinander über einen Zeitraum von mindestens 90 Tagen bei Raumtemperatur reaktionsfähig bleiben und ohne Aktivierung einer Härtungsreaktion unterliegen, wenn sie miteinander in Kontakt gebracht werden.

2. Kationisch härtende Epoxidmassen, bestehend aus
   (A) Verbindungen, die unter der Einwirkung von Licht mit einer Wellenlänge zwischen 280 und 650 nm Lewis-Säuren und/oder Brönsted-Säuren erzeugen,
   (B) Kationisch polymerisierbaren epoxidgruppenhaltigen Monomeren
   sowie mindestens einem der weiteren Bestandteile
   (C) Flexibilisierungsmittel
   (D) Verzögerer
   (E) Radikalisch polymerisierbare Monomere
   (F) Beschleuniger
   (G) Modifikatoren, ausgewählt aus der aus Farbstoffen, Pigmenten, Füllstoffen, Verstärkungsmitteln, Thixotropiermitteln, Initiatoren, Stabilisatoren, Inhibitoren und Haftvermittlern bestehenden Gruppe,
   wobei die Bestandteile (A), (B) und die aus der Gruppe (C) bis (G) ausgewählten Bestandteile auf mindestens zwei Komponenten derart aufgeteilt sind, daß die mindestens eine Komponente, die den Bestandteil (A) enthält, höchstens 20 % Bestandteil (B), bezogen auf die Gesamtmasse der jeweiligen, den Bestandteil (A) enthaltenden Komponente, enthält, und daß die Komponenten getrennt voneinander sowohl vor als auch nach einer aktivierenden Belichtung der den Bestandteil (A) enthaltende(n) Komponente(n) über einen Zeitraum von mindestens 90 Tagen bei Raumtemperatur reaktionsfähig bleiben und nach einer aktivierenden Belichtung der den Bestandteil (A) enthaltende(n) Komponente(n) einer Härtungsreaktion unterliegen, wenn sie miteinander in Kontakt gebracht werden.

3. Kationisch härtende Epoxidmassen, bestehend aus
   (A) einem Gemisch aus Verbindungen, die unter der Einwirkung von Licht mit einer Wellenlänge zwischen 280 und 650 nm Lewis-Säuren und/oder Brönsted-Säuren erzeugen, und Lewis-Säuren und/oder Brönsted-Säuren
   (B) Kationisch polymerisierbaren epoxidgruppenhaltigen Monomeren
   sowie mindestens einem der weiteren Bestandteile
   (C) Flexibilisierungsmittel
   (D) Verzögerer
   (E) Radikalisch polymerisierbare Monomere
   (F) Beschleuniger
   (G) Modifikatoren, ausgewählt aus der aus Farbstoffen, Pigmenten, Füllstoffen, Verstärkungsmitteln, Thixotropiermitteln, Initiatoren, Stabilisatoren, Inhibitoren und Haftvermittlern bestehenden Gruppe, wobei die Bestandteile (A), (B) und die aus der Gruppe (C) bis (G) ausgewählten Bestandteile auf mindestens zwei Komponenten derart aufgeteilt sind, daß die mindestens eine Komponente, die den Bestandteil (A) enthält, höchstens 20 % Bestandteil (B), bezogen auf die Gesamtmasse der jeweiligen, den Bestandteil (A) enthaltenden Komponente, enthält, und daß die Komponenten getrennt voneinander sowohl vor als auch nach einer aktivierenden Belichtung der den Bestandteil

(A) enthaltende(n) Komponente(n) über einen Zeitraum von mindestens 90 Tagen bei Raumtemperatur reaktionsfähig bleiben und nach einer aktivierenden Belichtung der den Bestandteil (A) enthaltenden Komponente(n) einer Härtungsreaktion unterliegen, wenn sie miteinander in Kontakt gebracht werden.

**4.** Kationisch härtende Epoxidmassen, bestehend aus
(A) einem Gemisch aus Verbindungen, die Lewis-Säuren und/oder Brönsted-Säuren erzeugen, und Lewis-Säuren und/oder Brönsted-Säuren
(B) Kationisch polymerisierbaren epoxidgruppenhaltigen Monomeren
sowie mindestens einem der weiteren Bestandteile
(C) Flexibilisierungsmittel
(D) Verzögerer
(E) Radikalisch polymerisierbare Monomere
(F) Beschleuniger
(G) Modifikatoren, ausgewählt aus der aus Farbstoffen, Pigmenten, Füllstoffen, Verstärkungsmitteln, Thixotropiermitteln, Initiatoren, Stabilisatoren, Inhibitoren und Haftvermittlern bestehenden Gruppe, wobei die Bestandteile (A), (B) und die aus der Gruppe (C) bis (G) ausgewählten Bestandteile auf mindestens zwei Komponenten derart aufgeteilt sind, daß die mindestens eine Komponente, die den Bestandteil (A) enthält, höchstens 20 % Bestandteil (B), bezogen auf die Gesamtmasse der jeweiligen, den Bestandteil (A) enthaltenden Komponente, enthält, und daß die Komponenten getrennt voneinander über einen Zeitraum von mindestens 90 Tagen bei Raumtemperatur reaktionsfähig bleiben und ohne eine aktivierende Belichtung der den Bestandteil (A) enthaltenden Komponente(n) einer Härtungsreaktion unterliegen, wenn sie miteinander in Kontakt gebracht werden.

**5.** Kationisch härtende Epoxidmassen nach einem der Ansprüche 1, 3 oder 4, dadurch gekennzeichnet, daß die Lewis-Säuren und/oder Brönsted-Säuren mindestens teilweise in Form ihrer Anlagerungskomplexe vorliegen.

**6.** Kationisch härtende Epoxidmassen nach Anspruch 5, dadurch gekennzeichnet, daß die Anlagerungskomplexe Hydrate oder Etherkomplexe sind.

**7.** Kationisch härtende Epoxidmassen nach einem der Ansprüche 2 bis 6, dadurch gekennzeichnet, daß die den Bestandteil (A) enthaltende(n) Komponente(n) gleichzeitig den Bestandteil (D) enthält bzw. enthalten.

**8.** Kationisch härtende Epoxidmassen nach Anspruch 7, dadurch gekennzeichnet, daß der Bestandteil (D) aus 8-Hydroxychinolin und/oder Derivaten des 8-Hydroxychinolins besteht.

**9.** Kationisch härtende Epoxidmassen nach einem der Ansprüche 2 bis 8, dadurch gekennzeichnet, daß mindestens eine Komponente, welche nicht den Bestandteil (A) enthält, den Bestandteil (F) enthält.

**10.** Kationisch härtende Epoxidmassen nach Anspruch 9, dadurch gekennzeichnet, daß der Bestandteil (F) aus mindestens einer organischen Peroxoverbindung besteht.

**11.** Kationisch härtende Epoxidmassen nach Anspruch 10, dadurch gekennzeichnet, daß die organische Peroxoverbindung ein Hydroperoxid, ein Perester und/oder ein Diacylperoxid ist.

**12.** Kationisch härtende Epoxidmassen nach einem der Ansprüche 1 bis 11, dadurch gekennzeichnet, daß nur eine der mindestens zwei Komponenten den Bestandteil (B) enthält.

**13.** Kationisch härtende Epoxidmassen nach einem der Ansprüche 1 bis 11, dadurch gekennzeichnet, daß mindestens zwei Komponenten den Bestandteil (B) enthalten.

**14.** Kationisch härtende Epoxidmassen nach einem der Ansprüche 1 bis 13, dadurch gekennzeichnet, daß die mindestens eine Komponente, die den Bestandteil (A) enthält, höchstens 2 % Bestandteil (B), bezogen auf die Gesamtmasse der jeweiligen, den Bestandteil (A) enthaltenden Komponente, enthält.

**15.** Kationisch härtende Epoxidmassen nach einem der Ansprüche 1 bis 14, dadurch gekennzeichnet, daß sie in mindestens einer ihrer Komponenten den Bestandteil (E) in einer Menge von 1 bis 99 %, bezogen auf die Gesamtmasse der jeweiligen Komponente, enthalten.

**16.** Kationisch härtende Epoxidmassen nach einem der Ansprüche 1 bis 15, dadurch gekennzeichnet, daß die den Bestandteil (A) enthaltende(n) Komponente(n) jeweils 0,01 bis 5 % (A), bezogen auf die Gesamtmasse der jeweiligen Komponente, enthält bzw. enthalten.

**17.** Kationisch härtende Epoxidmassen nach einem der Ansprüche 1 bis 16, dadurch gekennzeichnet, daß mindestens eine ihrer Komponenten den Bestandteil (C) in einer Menge von 5 bis 99,95 %, bezogen auf die Gesamtmasse der jeweiligen Komponente, enthält.

**18.** Kationisch härtende Epoxidmassen nach Anspruch 17, dadurch gekennzeichnet, daß die Komponente (C) aus mindestens einer Verbindung, ausgewählt aus der Gruppe der Alkohole, Glykole, Polyalkoxyglykole, Polyesterpolyole, deren Ester, Ether, Partialester und Partialether, besteht.

**19.** Kationisch härtende Epoxidmassen nach Anspruch 18, dadurch gekennzeichnet, daß die ausgewählten Flexibilisierungsmittel eine Molmasse zwischen 200 und 29 000 g/Mol besitzen.

**20.** Kationisch härtende Epoxidmassen nach Anspruch 19, dadurch gekennzeichnet, daß die ausgewählten Flexibilisierungsmittel Molmassen zwischen 560 und 7000 g/Mol besitzen.

**21.** Kationisch härtende Epoxidmassen nach einem der Ansprüche 1 bis 20, dadurch gekennzeichnet, daß mindestens eine ihrer Komponenten den Bestandteil (G) in einer Menge von 0,1 bis 70 %, bezogen auf die Gesamtmasse der jeweiligen Komponente, enthält.

**22.** Kationisch härtende Epoxidmassen nach einem der Ansprüche 1 bis 21, dadurch gekennzeichnet, daß die Bestandteile (A), (B) und die aus der Gruppe (C) bis (G) ausgewählten Bestandteile auf zwei Komponenten aufgeteilt sind.

**23.** Kationisch härtende Epoxidmassen nach Anspruch 22, dadurch gekennzeichnet, daß die erste Komponente die Bestandteile (A) und (C) enthält und daß die zweite Komponente den Bestandteil (B) enthält.

**24.** Kationisch härtende Epoxidmassen nach Anspruch 23, dadurch gekennzeichnet, daß die erste Komponente aus den Bestandteilen (A), (C) und (E) besteht und daß die zweite Komponente aus (B) sowie den Bestandteilen (C), (D), (E), (F) und/oder (G) besteht.

**25.** Verfahren zur Herstellung von kationisch gehärteten Massen, dadurch gekennzeichnet, daß eine mindestens zweikomponentige kationisch härtende Epoxidmasse gemäß einem der Ansprüche 2, 3 oder 5 bis 24 zubereitet wird, daß die den Bestandteil (A) enthaltende(n) Komponente(n) durch Bestrahlung mit Licht im Wellenlängenbereich von 280 bis 650 nm aktiviert und die weitere(n) Komponente(n) während oder nach der Bestrahlung mit der (den) aktivierten Komponente(n) in Kontakt gebracht wird bzw. werden, worauf die Massen innerhalb eines Zeitraums von zwischen 1 und 1000 Sekunden, vorzugsweise zwischen 10 und 200 Sekunden, aushärten.

**26.** Verfahren nach Anspruch 25, dadurch gekennzeichnet, daß für die Bestrahlung sichtbares Licht verwendet wird.

**27.** Verfahren nach Anspruch 25 oder 26, dadurch gekennzeichnet, daß die fotoaktivierte(n) Komponente(n) nach einer Lagerzeit von 100 Sekunden bis 90 Tagen mit der mindestens einen weiteren Komponente in Kontakt gebracht wird bzw. werden.

**28.** Verfahren nach einem der Ansprüche 25 bis 27, dadurch gekennzeichnet, daß die Belichtung der den Bestandteil (A) enthaltenden Komponente(n) diskontinuierlich in einem eine Durchlaufstrecke bildenden Reaktor oder chargenweise durchgeführt wird.

**29.** Verfahren nach einem der Ansprüche 25 bis 27, dadurch gekennzeichnet, daß die Belichtung der den Bestandteil (A) enthaltenden Komponente(n) kontinuierlich in einem eine Durchlaufstrecke bildenden

Reaktor durchgeführt wird.

**30.** Verfahren nach Anspruch 29, dadurch gekennzeichnet, daß ein Reaktor mit einer homogen belichteten Durchlaufstrecke aus lichtdurchlässigem Kunststoff verwendet wird, der gleichzeitig als statischer Mischer ausgebildet ist.

**31.** Verfahren nach Anspruch 29 oder 30, dadurch gekennzeichnet, daß die fotoaktivierte(n) Komponente(n) bei oder nach dem Verlassen der Belichtungseinrichtung mit der mindestens einen weiteren Komponente in Kontakt gebracht wird.

**32.** Verfahren nach Anspruch 31, dadurch gekennzeichnet, daß die fotoaktivierte(n) Komponente(n) mit der mindestens einen weiteren Komponente vermischt wird bzw. werden und daß die Zumischung der mindestens einen weiteren Komponente mit Hilfe eines statischen Mischers erfolgt.

**33.** Verfahren zur Herstellung von kationisch gehärteten Massen, dadurch gekennzeichnet, daß eine mindestens zweikomponentige kationisch härtende Epoxidmasse gemäß einem der Ansprüche 1 oder 4 bis 24 zubereitet wird, daß die den Bestandteil (A) enthaltende(n) Komponente(n) ohne Licht-Aktivierung mit der (den) weiteren Komponente(n) in Kontakt gebracht wird bzw. werden, worauf die Massen innerhalb eines Zeitraums von zwischen 1 und 1000 Sekunden, vorzugsweise zwischen 10 und 200 Sekunden, aushärten.

**34.** Verfahren nach einem der Ansprüche 25 bis 33, dadurch gekennzeichnet, daß die Massen nach ihrer Aushärtung einer Nachhärtung unterworfen werden.

**35.** Verfahren nach Anspruch 34, dadurch gekennzeichnet, daß die Nachhärtung mit Hilfe von Licht und/oder Wärme erfolgt.

**36.** Verwendung der kationisch härtenden Epoxidmassen gemäß einem der Ansprüche 1 bis 24 zum Verkleben, Vergießen, Abdichten und Beschichten von Substraten.